# EUROPÄISCHE PATENTSCHRIFT

(11) **EP 3 556 268 B1**
(45) Veröffentlichungstag und Bekanntmachung des Hinweises auf die Patenterteilung: **18.11.2020**
(21) Anmeldenummer: 19165842.6
(22) Anmeldetag: 28.03.2019
(51) Int. Cl.: A47J 31/40, A47J 31/44, A47J 31/52

(54) **PORTIONSKAFFEEAUTOMAT**
AUTOMATIC COFFEE MACHINE FOR CAPSULES
MACHINE À CAFÉ AUTOMATIQUE POUR CAPSULES

(30) Priorität: 16.04.2018 DE 102018205741
(43) Veröffentlichungstag der Anmeldung: 23.10.2019
(73) Patentinhaber: BSH Hausgeräte GmbH, 81739 München (DE)
(72) Erfinder: Fisch, Markus, 84326 Falkenberg (DE)

(56) Entgegenhaltungen:
- EP-A1- 3 167 775
- EP-A1- 3 275 345

## Beschreibung

Die vorliegende Erfindung betrifft einen Portionskaffeeautomaten mit einem ansteuerbaren Funktions-Modul und einer Aufnahme zur Aufnahme von Kaffee enthaltenden Kaffeekapseln.

Moderne Portionskaffeeautomaten ermöglichen bereits zum jetzigen Zeitpunkt neben der Zubereitung von unterschiedlichsten Kaffeevariationen weitere Zusatzfunktionen, wie beispielsweise das Aufschäumen von Milch. Zunehmend ist auch eine Vernetzung von modernen Getränkeautomaten, wie beispielsweise Portionskaffeeautomaten gewünscht, so dass diese beispielsweise mittels eines WiFi-Moduls ausgestattet und demzufolge beispielsweise über ein Mobiltelefon und das zugehörigen drahtlose Netzwerk aktiviert bzw. deaktiviert werden können.

Die Druckschrift EP-A-3 167 775 offenbart einen Portions-kaffeeautomaten mit einem ansteuerbaren WiFi-Modul und einer Aufnahme für Kaffeekapseln, wobei in der Aufnahme eine mit einer Steuereinrichtung verbundene Barcode-Leseeinrichtung angeordnet ist. Weisen beispielsweise derartige Portionskaffeeautomaten ein Wifi-Modul auf, so ist dieses entweder immer aktiviert oder aber es muss ein Schalter zum Aktivieren bzw. Deaktivieren, das heißt zum Ein- bzw. Ausschalten des Wifi-Moduls, vorgesehen werden, was nicht unerhebliche zusätzliche Herstellungs- und Montagekosten bewirkt.

Die vorliegende Erfindung beschäftigt sich daher mit dem Problem, einen verbesserten Portionskaffeeautomaten anzugeben, der die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem Portionskaffeeautomaten mit einem ansteuerbaren WiFi-Modul und einer Aufnahme zur Aufnahme von Kaffeekapseln, eine ohnehin in der Aufnahme vorhandene Leseeinrichtung, insbesondere eine Barcode-Leseeinrichtung, zum Aktivieren bzw. Deaktivieren des WiFi-Moduls zu verwenden. Eine derartige Leseeinrichtung, welche bislang im Brühkopf bzw. in der Aufnahme angeordnet war, wurde bislang dazu benutzt, eingelegte Reinigungskapseln bzw. Kaffee- oder andere Getränke-Kapseln zu identifizieren und in Abhängigkeit der Identifikation den Reinigungsvorgang zu starten. Bei dem erfindungsgemäßen Portionskaffeeautomaten ist nun zusätzlich ein WiFi-Modul vorgesehen, welches mittels einer Steuereinrichtung aktivierbar bzw. deaktivierbar, das heißt ein- bzw. ausschaltbar ist. Hierzu ist die Steuereinrichtung informationsübertragend mit der Leseeinrichtung, insbesondere mit der Barcode-Leseeinrichtung, verbunden. Ebenfalls vorgesehen ist zumindest eine Kaffeekapsel oder ein Papiereinleger, auf welcher/welchem zumindest ein Ein-/Ausschaltbefehl in der Art einer von der Leseeinrichtung lesbaren Information, insbesondere eines Barcodes, für das WiFi-Modul hinterlegt ist, so dass durch ein Einlegen der Kaffeekapsel oder des Papiereinlegers in die Aufnahme die Steuereinrichtung einen Befehl zum Ein- oder Ausschalten des WiFi-Moduls erhält und dieses daraufhin ein- oder ausschaltet. Durch den erfindungsgemäßen Portionskaffeeautomaten ist somit ein bislang separater Schalter bzw. Taster zum Aktivieren bzw. Deaktivieren des WiFi-Moduls entbehrlich, wodurch sich nicht nur erhebliche Montagevorteile, sondern auch erhebliche Kostenvorteile ergeben. Insbesondere werden auch keine zusätzlichen Bauteile für beispielsweise Schalter erforderlich. Zudem steigt die Benutzerfreundlichkeit durch das Wegfallen weiterer Taster bzw. Schalter erheblich. Eine derartige Kaffeekapsel bzw. ein derartiger Papiereinleger oder ein entsprechender Kunststoffstreifen dient somit als spezieller Schlüssel zum Ansteuern des WiFi-Moduls.

Bei einer vorteilhaften Weiterbildung der erfindungsgemäßen Lösung ist ein Funktions-modul vorgesehen, welches ebenfalls über eine entsprechende auf der Kaffeekapsel bzw. dem Papiereinleger angeordnete lesbare Information, insbesondere einen entsprechenden auf der Kaffeekapsel bzw. dem Papiereinleger angeordneten Barcode, aktiviert bzw. deaktiviert werden kann. Ein derartiges Funktions-Modul kann beispielsweise ein Bluetooth-Modul, ein Radio, ein Wecker, ein NFC-Modul (Near Field Modul), eine Uhr oder ein Modul, welches eine drahtlose Verbindung herstellt, sein. Bereits diese nicht abschließende Aufzählung lässt erahnen, welch mannigfaltige Möglichkeiten der erfindungsgemäße Portionskaffeeautomat bietet, in dem er eine ohnehin bereits verbaute Leseeinrichtung sowie eine ohnehin bereits verbaute Steuereinrichtung zum Steuern weiterer Funktionen nutzt.

Zweckmäßig sind in dem Barcode benutzerspezifische Daten oder Zubereitungsanweisungen hinterlegt. Zusätzlich zu den in den vorherigen Absätzen beschriebenen ansteuerbaren Funktionen können in dem Barcode neben einem Ein- bzw. Ausschaltbefehl für das WiFi-Modul auch benutzerspezifische Daten hinterlegt werden, welche beispielsweise individuelle Geschmackswünsche bei der Zubereitung von Kaffeegetränken berücksichtigen. So können beispielsweise eine Kaffeemenge, eine Brühdauer, eine Wassermenge etc. individuell festgelegt und in der lesbaren Information bzw. dem Barcode hinterlegt werden, so dass nach einem Einführen des Papiereinlegers bzw. der Kaffeekapsel in die Aufnahme die Leseeinrichtung die benutzerspezifische Daten bzw. Zubereitungsanweisungen auslesen und über die Steuereinrichtung die Zubereitung von gewünschten Kaffeegetränken entsprechend anpassen kann. In der lesbaren Information können auch Befehle zur Freischaltung gebührenpflichtiger Dienste enthalten sein, so dass die Leseeinrichtung diese Befehle auslesen und über die Steuereinrichtung die gebührenpflichtigen Dienste aktivieren kann.

Alles in allem kann bei dem erfindungsgemäßen Portionskaffeeautomaten somit ohne das Vorsehen weiterer, zusätzlicher Funktionselemente, wie beispielsweise Taster oder Schalter, ein Wifi-Modul vergleichsweise einfach ein- bzw. ausgeschaltet werden, da hierfür eine ohnehin in dem erfindungsgemäßen Portionskaffeeautomaten verbaute Steuereinrichtung und Leseeinrichtung, insbesondere Barcode-Leseeinrichtung, genutzt werden können. Selbstverständlich können über einen entsprechenden an der Kaffeekapsel bzw. an dem Papiereinleger angeordnete Barcode bzw. Information auch noch weitere Funktionen aktiviert bzw. deaktiviert oder entsprechende Steuerungsbefehle an den Portionskaffeeautomaten übermittelt werden. Durch den Wegfall eines bislang hierfür erforderlichen Schalters, insbesondere zum Aktiveren bzw. Deaktivieren eines WiFi-Moduls, lässt sich zudem auch die Teilevielfalt reduzieren, wodurch sich die Lager- und Logistikkosten senken lassen. Dabei ist es denkbar, dass mittels einer entsprechenden Software individuelle Parameter in der Information bzw. in dem Barcode hinterlegt, dieser ausgedruckt und auf einem entsprechenden Papiereinleger bzw. auf einer entsprechenden Kaffeekapsel aufgedruckt werden können.

Von wesentlichem Vorteil ist darüber hinaus, dass das WiFi-Modul nur dann aktiviert ist, sofern dies auch erforderlich ist, wodurch eine Reduzierung von elektromagnetischer Strahlung, insbesondere im häuslichen Bereich erreicht werden kann.

## Patentansprüche

1. Portionskaffeeautomat mit einem ansteuerbaren WiFi-Modul und einer Aufnahme zur Aufnahme von Kaffeekapseln, wobei in der Aufnahme eine mit einer Steuereinrichtung verbundene Leseeinrichtung, insbesondere eine Barcode-Leseeinrichtung, angeordnet ist, wobei zumindest eine Kaffeekapsel oder ein Papiereinleger vorgesehen ist, auf welchem zumindest ein Ein-/Ausschaltbefehl in der Art einer für die Leseeinrichtung lesbaren Information, insbesondere eines Barcodes, für das WiFi-Modul hinterlegt ist, sodass durch Einlegen der Kaffeekapsel oder des Papiereinlegers in die Aufnahme die Steuereinrichtung einen Befehl zum Ein- oder Ausschalten des WiFi-Moduls erhält, wobei die Steuereinrichtung derart ausgebildet ist, dass sie aufgrund des erhaltenen Befehls das WiFi-Modul ein- oder ausschaltet.

2. Portionskaffeeautomat nach Anspruch 1, **dadurch gekennzeichnet, dass** ein von der Steuereinrichtung ansteuerbares Funktions-Modul vorgesehen ist, wobei zumindest eine Kaffeekapsel oder ein Papiereinleger vorgesehen ist, auf welcher/welchem zumindest ein Ein-/Ausschaltbefehl in der Art einer für die Leseeinrichtung lesbaren Information, insbesondere eines Barcodes, für das Funktions-Modul hinterlegt ist, sodass durch Einlegen der Kaffeekapsel oder des Papiereinlegers in die Aufnahme die Steuereinrichtung einen Befehl zum Ein- oder Ausschalten des Funktions-Moduls erhält, wobei die Steuereinrichtung derart ausgebildet ist, dass sie aufgrund des erhaltenen Befehls das Funktions-Modul ein- oder ausschaltet.

3. Portionskaffeeautomat nach Anspruch 2, **dadurch gekennzeichnet, dass** das Funktions-Modul ein Bluetooth-Modul ist.

4. Portionskaffeeautomat nach Anspruch 2 oder 3, **dadurch gekennzeichnet, dass** das Funktions-Modul ein Radio ist.

5. Portionskaffeeautomat nach einem der Ansprüche 2 bis 4, **dadurch gekennzeichnet, dass** das Funktions-Modul eine Uhr ist.

6. Portionskaffeeautomat nach einem der Ansprüche 2 bis 5, **dadurch gekennzeichnet, dass** das Funktions-Modul ein Wecker ist.

7. Portionskaffeeautomat nach einem der Ansprüche 2 bis 6, **dadurch gekennzeichnet, dass** das Funktions-Modul ein NFC-Modul ist.

8. Portionskaffeeautomat nach einem der Ansprüche 2 bis 7, **dadurch gekennzeichnet, dass** das Funktions-Modul ein Modul ist, welches eine drahtlose Verbindung herstellt.

9. Portionskaffeeautomat nach einem der Ansprüche 2 bis 8, **dadurch gekennzeichnet, dass** die lesbare Information, Befehle zur Freischaltung gebührenpflichtiger Dienste enthält.

10. Portionskaffeeautomat nach einem der vorhergehenden Ansprüche, **dadurch gekennzeichnet, dass** in der für die Leseeinrichtung lesbaren Information, insbesondere in dem Barcode, benutzerspezifische Daten oder Zubereitungsanweisungen hinterlegt sind.

## Claims

1. Automatic single-serve coffee machine with an actuatable Wi-Fi module and a receptacle for receiving coffee capsules, wherein a reader facility connected to a control facility, in particular a barcode reader facility, is arranged in the receptacle, wherein at least one coffee capsule or a paper insert is provided, on which at least one switch-on/switch-off command in the manner of an item of information which can be read by the reader facility, in particular a barcode, is stored for the Wi-Fi module, so that by inserting the coffee capsule or the paper insert into the receptacle, the control facility obtains a command for switching the Wi-Fi module on or off, wherein the control facility is embodied in such a way that it switches the Wi-Fi module on or off on the basis of the command obtained.

2. Automatic single-serve coffee machine according to claim 1, **characterised in that** a functional module which is to be actuated by the control facility is provided, wherein at least one coffee capsule or one paper insert is provided, on which at least one switch-on/switch-off command in the manner of an item of information which can be read by the reader facility, in particular a barcode, is stored for the functional module, so that by inserting the coffee capsule or the paper insert into the receptacle, the control facility obtains a command for switching the functional module on or off, wherein the control facility is embodied in such a way that it switches the functional module on or off on the basis of the command obtained.

3. Automatic single-serve coffee machine according to claim 2, **characterised in that** the functional module is a Bluetooth module.

4. Automatic single-serve coffee machine according to claim 2 or 3, **characterised in that** the functional module is a radio.

5. Automatic single-serve coffee machine according to one of claims 2 to 4, **characterised in that** the functional module a clock.

6. Automatic single-serve coffee machine according to one of claims 2 to 5, **characterised in that** the functional module is an alarm.

7. Automatic single-serve coffee machine according to one of claims 2 to 6, **characterised in that** the functional module is an NFC module.

8. Automatic single-serve coffee machine according to one of claims 2 to 7, **characterised in that** the functional module is a module which establishes a wireless connection.

9. Automatic single-serve coffee machine according to one of claims 2 to 8, **characterised in that** the readable information contains commands for enabling services which are subject to charge.

10. Automatic single-serve coffee machine according to one of the preceding claims, **characterised in that** user-specific data or preparation instructions are stored in the information which can be read by the reader facility, in particular in the barcode.

## Revendications

1. Machine à café pour capsules comprenant un module WiFi commandable et un logement pour le logement de capsules de café, dans laquelle un dispositif de lecture relié à un dispositif de commande, notamment un dispositif de lecture de code à barres, est disposé dans le logement, dans laquelle au moins une capsule de café ou un insert en papier est ménagé, sur lequel au moins une instruction de mise en marche/mise en arrêt de manière similaire à une information lisible pour le dispositif de lecture, notamment un code à barres, est mémorisée pour le module WiFi de sorte qu'en posant la capsule de café ou l'insert en papier dans le logement, le dispositif de commande reçoit une instruction de mise en marche ou mise en arrêt du module WiFi, dans laquelle le dispositif de commande est réalisé de manière à ce qu'il mette en marche ou arrête le module WiFi en raison de l'instruction reçue.

2. Machine à café pour capsules selon la revendication 1, **caractérisée en ce qu'**un module de fonction commandable par le dispositif de commande est ménagé, dans laquelle au moins une capsule de café ou un insert en papier est ménagé, sur laquelle/lequel au moins une instruction de mise en marche/mise en arrêt de manière similaire à une information lisible pour le dispositif de lecture, notamment un code à barres, est mémorisée pour le module de fonction de sorte qu'en posant la capsule de café ou l'insert en papier dans le logement, le dispositif de commande reçoit une instruction de mise en marche ou mise en arrêt du module de fonction, dans laquelle le dispositif de commande est réalisé de manière à ce qu'il mette en marche ou arrête le module de fonction en raison de l'instruction reçue.

3. Machine à café pour capsules selon la revendication 2, **caractérisée en ce que** le module de fonction est un module Bluetooth.

4. Machine à café pour capsules selon la revendication 2 ou 3, **caractérisée en ce que** le module de fonction est une radio.

5. Machine à café pour capsules selon l'une quelconque des revendications 2 à 4, **caractérisée en ce que** le module de fonction est une horloge.

6. Machine à café pour capsules selon l'une quelconque des revendications 2 à 5, **caractérisée en ce que** le module de fonction est un réveil.

7. Machine à café pour capsules selon l'une quelconque des revendications 2 à 6, **caractérisée en ce que** le module de fonction est un module NFC.

8. Machine à café pour capsules selon l'une quelconque des revendications 2 à 7, **caractérisée en ce que** le module de fonction est un module qui établit une liaison sans fil.

9. Machine à café pour capsules selon l'une quelconque des revendications 2 à 8, **caractérisée en ce que** l'information lisible comprend des instructions pour la libération de services payants.

10. Machine à café pour capsules selon l'une quelconque des revendications précédentes, **caractérisée en ce que** des données spécifiques à l'utilisateur ou des instructions de préparation sont mémorisées dans l'information lisible pour le dispositif de lecture, notamment dans le code à barres.
